# EUROPEAN PATENT SPECIFICATION

(11) **EP 2 395 687 B1**
(45) Date of publication and mention of the grant of the patent: **06.03.2013**
(21) Application number: 11177253.9
(22) Date of filing: 19.03.2004
(51) Int. Cl.: H04L 1/00, H04W 40/02, H04W 52/26

(54) **Dynamic routing for data transmissions**
Dynamische Führung für Datenübertragungen
Routage dynamique pour transmission de données

(30) Priority: 26.03.2003 US 397445
(43) Date of publication of application: 14.12.2011
(62) Divisional of application: 04759689.5
(73) Proprietor: Sony Electronics Inc., Park Ridge, NJ 07656 (US)
(72) Inventor: Dacosta, Behram M, San Diego, CA California 92128 (US)
(74) Representative: McGowan, Cathrine

(56) References cited:
- EP-A2- 1 179 906
- WO-A1-96/18156
- US-A1- 2001 040 912

## Description

### FIELD OF THE INVENTION

Embodiments of the invention relates to the field of communication, and more specifically, to data transmission.

### DESCRIPTION OF THE RELATED ART

In a typical network environment, the status of a node in the network may change dynamically according to the network characteristics or conditions. For example, a node may experience heavy traffic leading to a node congestion.

Current techniques to deal with the problem have a number of drawbacks. Techniques based on complex algorithms for re-routing require extensive computations and a large amount of resources in memory usage and bandwidth. In addition, these techniques are not well suited to mixed media or transmissions that use different techniques. In some applications, it is useful to send error checking information along with the payload data being transmitted. However, the error checking or correction information may increase complexity of streaming packets due to changing packet sizes, as well as increase the difficulty in sizing packets to achieve optimal link capacity.

US 2001/040912 describes a method for making efficient use of the spectral bandwidth in a wireless discrete multitone spread spectrum communications system. Each remote station and each base station in the network prepares an error detection field, such as a cyclic redundancy code (CRC), on each block of data to be transmitted over the traffic channels. The sending station prepares an error detection message for transmission over the link control channel of the network. The sending station prepares the error detection message by forming a link control channel vector that will be spread using the discrete multitone spread spectrum protocol to distribute the data message over a plurality of discrete tone frequencies, forming a spread signal for the link control channel. A link control channel is associated with communications session using the traffic channels. The instant of transmission of the error detection message is allowed to be different from the instant of transmission of the data message. This permits the error detection messages to be transmitted when capacity is available on the link control channel. The receiving station buffers the error detection messages it receives from the link control channel, so that they are accessible by their block numbers. When the receiving station receives a data message on the traffic channel, it performs a CRC calculation on the data block in the message to obtain a resulting new CRC value. The new CRC value is also buffered at the receiving station with the block number so that it is accessible by its block number. Then, when both the received error message and the new CRC value are both available at the receiving station, they are matched by their common block number. The received CRC value in the error detection message is compared with the new CRC computed from the received data block. If the comparison determines that there is a difference in the values, then an error signal is generated.

EP 1,179,906 describes a method of optical data transmission whereby digital information data and its associated error control data may be transmitted via an optical transmission line without requiring an increase in the transmission bit rate of the information data. A subset of wavelength division multiplexing (WDM) transmission channels is used in transmitting information data, but not simultaneously used in transmitting associated error control data, which is transmitted via a different subset of other WDM transmission channels.

### SUMMARY OF THE INVENTION

An embodiment of the present invention is a technique to dynamically route data packets. A network table is built at a first node. The network table includes transmission paths for a data packet transmitted from the first node to a second node in a network. The data packet has a transmission requirement. An optimal path is selected from the transmission paths according to the transmission requirement. The data packet is routed from the first node to the second node using the optimal path.

### BRIEF DESCRIPTION OF THE DRAWINGS

The invention may best be understood by referring to the following description and accompanying drawings that are used to illustrate embodiments of the invention. In the drawings:
Figure 1A is a diagram illustrating a system in which one embodiment of the invention can be practiced.
Figure 1B is a diagram illustrating a host computer system in which one embodiment of the invention can be practiced.
Figure 2 is a diagram illustrating a communication network according to one embodiment of the invention.
Figure 3 is a diagram illustrating a network table according to one embodiment of the invention.
Figure 4 is a diagram illustrating an ID packet according to one embodiment of the invention.
Figure 5 is a flowchart illustrating a process to dynamically route packets according to one embodiment of the invention.
Figure 6 is a flowchart illustrating a process to build a network table according to one embodiment of the invention.
Figure 7 is a flowchart illustrating a process to select optimal path according to one embodiment of the invention.
Figure 8 is a diagram illustrating a system with separate error channel according to one embodiment of the invention.

### DESCRIPTION

An embodiment of the present invention is a technique to dynamically route data packets. A network table is built at a first node. The network table includes transmission paths for a data packet transmitted from the first node to a second node in a network. The data packet has a transmission requirement. An optimal path is selected from the transmission paths according to the transmission requirement. The data packet is routed from the first node to the second node using the optimal path.

In the following description, numerous specific details are set forth. However, it is understood that embodiments of the invention may be practiced without these specific details. In other instances, well-known circuits, structures, and techniques have not been shown in order not to obscure the understanding of this description.

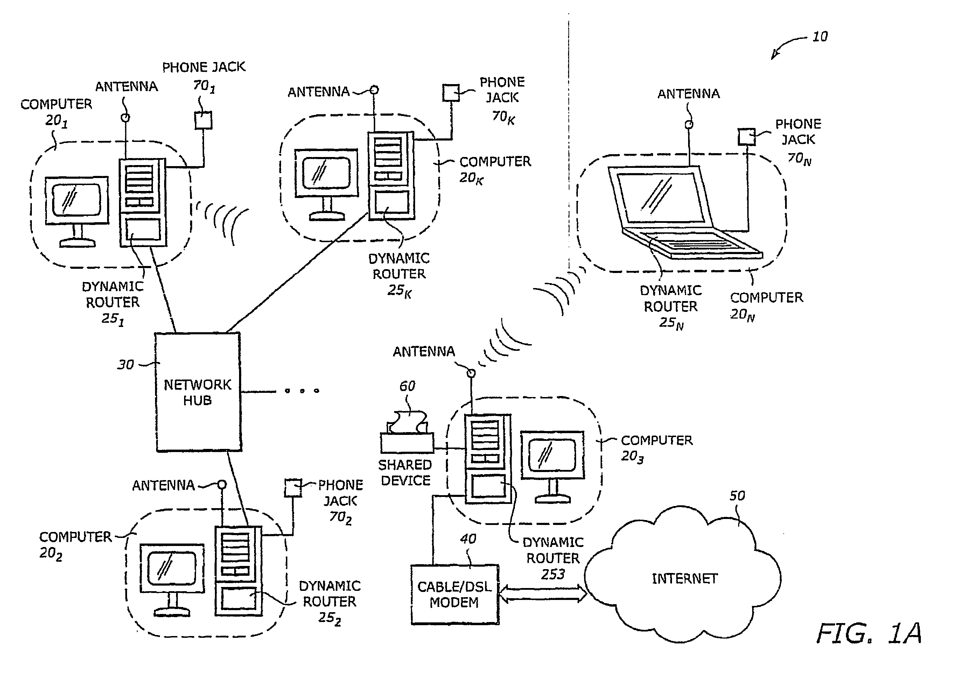

Figure 1A is a diagram illustrating a system 10 in which one embodiment of the invention can be practiced The system 10 represents a typical home or small office network. The system 10 includes N computers 20₁ to 20_{N}, a network hub 30, a cable/digital subscriber link (DSL) modem, a shared device 60. Note that the system 10 may include more or less than these components.

Each of the N computers 20₁ to 20_{N} is a processing unit, device, or system formed a node or a station in the network. They can be located at various locations within short distances from one another. For example, in a home network, they can be located in individual bedrooms, living room, library, den, or even at the back yard or front yard. They can be located on the floor level, the basement, or the upper level. Each computer may be a desktop computer system, a laptop, a notebook, or a handheld computer such as a personal digital assistant (PDA). Each may contain a platform, a monitor, and input and output devices. In particular, each computer contains a dynamic router 25i (i= 1, ..., N) that can dynamically route data packets according to the dynamic conditions of the network. Each of the N computers 20₁ to 20_{N} may have network devices to transmit and receive data. The network devices may include appropriate network adapters, antenna, modem interfaces, etc.

The system 10 may be configured for one type of network technology or multiple technologies with mixed media. Typically, each of the N computers 20₁ to 20_{N} may have transmission interface compatible to at least an Institute of Electrical and Electronics Engineers (IEEE) 802.11 communication such as Wireless Fidelity (Wi-Fi) connection, 802.11a, 802.11b, 802.11g, etc., a home phoneline network alliance (HPNA) communication, a ultra wide band (UWB) communication, a multimedia network protocol communication, a wireless communication, a power-line communication (e.g., HomePlug, X-10), an Ethernet communication, a versatile home network (VHN) communication, a Bluetooth communication, a home radio frequency (RF) communication, and an IEEE 1394 communication.

The network hub 30 is a central connection point to distribute connections to the computers 20₁ to 20_{N}. Typically, the network hub 30 is an Ethernet hub. Each of computers 20₁ to 20_{N} may have an Ethernet adapter card and cables to connect to other computers. The cables may be coaxial cable (for 10Base2) or twisted pair cable (for 10BaseT or 100BaseT).

The cable/DSL modem 40 provides high speed access to public networks such as the Internet 50. The cable/DSL modem 40 may also interface to a cable router to connect to multiple computers located at various locations in the home or small office. Each of the N computers 20₁ to 20_{N} may have connections to a phone jack 70 to transmit data using phone lines such as in the HPNA network or in a dial-up connection. They may also have adapters for wireless communication such as Wi-Fi, 802,11x where x = a, b, .., g, Bluetooth, infrared, radio frequency (RF), etc.

The shared device 60 is any device that is shared by any of the N computers 20₁ to 20_{N}. Examples of the shared device 60 may be a printer, a mass storage subsystem (e.g., tape libary), or an entertainment system (e.g., audio, video subsystems).

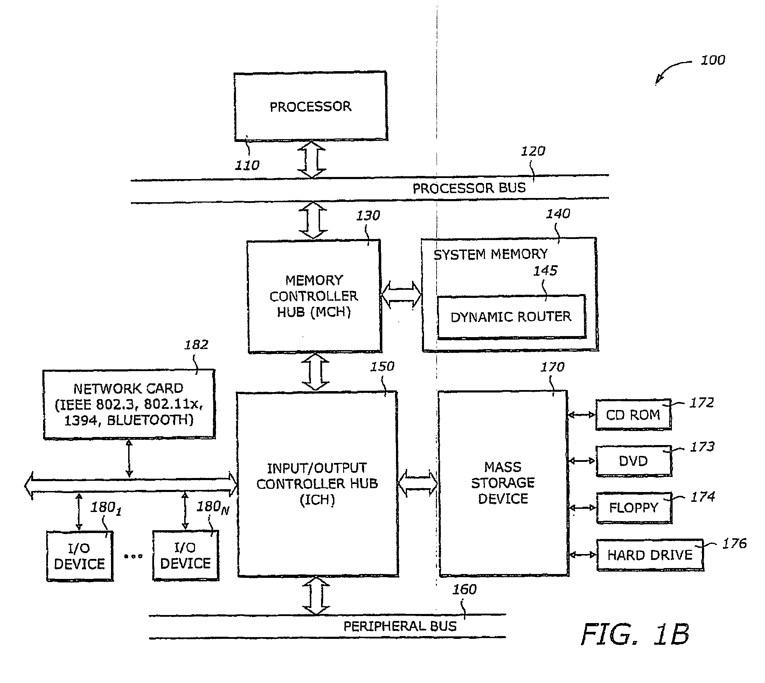

Figure 1B is a diagram illustrating a computer 20 in which one embodiment of the invention can be practiced. The computer 20 includes a host processor 110, a host bus 120, a memory control hub (MCH) 130, a system memory 140, an input/output control hub (ICH) 150, a peripheral bus 155, a mass storage device 170, input/output devices 180_{I} to 180_{K}, and a network card 182. Note that the computer 20 may include more or less elements than these elements.

The host processor 110 represents a central processing unit of any type of architecture, such as embedded processors, mobile processors, micro-controllers, digital signal processors, superscalar computers, vector processors, single instruction multiple data (SIMD) computers, complex instruction set computers (CISC), reduced instruction set computers (RISC), very long instruction word (VLIW), or hybrid architecture.

The host bus 120 provides interface signals to allow the processor 110 to communicate with other processors or devices, e.g., the MCH 130. The host bus 120 may support a uni-processor or multiprocessor configuration. The host bus 120 may be parallel, sequential, pipelined, asynchronous, synchronous, or any combination thereof.

The MCH 130 provides control and configuration of memory and input/output devices such as the system memory 140 and the ICH 150. The MCH 130 maybe integrated into a chipset that integrates multiple functionalities such as the isolated execution mode, host-to-peripheral bus interface, memory control. The MCH 130 interfaces to the peripheral bus 155. For clarity, not all the peripheral buses are shown. It is contemplated that the system 100 may also include peripheral buses such as Peripheral Component Interconnect (PCI), accelerated graphics port (AGP), Industry Standard Architecture (ISA) bus, and Universal Serial Bus (USB), etc.

The system memory 140 stores system code and data. The system memory 140 is typically implemented with dynamic random access memory (DRAM) or static random access memory (SRAM). The system memory may include program code or code segments implementing one embodiment of the invention. The system memory includes a dynamic router module 145. Any one of the elements of the dynamic router module 145 may be implemented by hardware, software, firmware, microcode, or any combination thereof. The system memory 140 may also include other programs or data which are not shown, such as an operating system. The dynamic router module 145 may implement all or part of the dynamic routing functions. The dynamic router module 145 may also simulate the dynamic routing functions.

The ICH 150 has a number of functionalities that are designed to support I/O functions. The ICH 150 may also be integrated into a chipset together or separate from the MCH 130 to perform I/O functions. The ICH 150 may include a number of interface and I/O functions such as PCI bus interface to interface to the peripheral bus 155, processor interface, interrupt controller, direct memory access (DMA) controller, power management logic, timer, system management bus (SMBus), universal serial bus (USB) interface, mass storage interface, low pin count (LPC) interface, etc.

The mass storage device 170 stores archive information such as code, programs, files, data, applications, and operating systems. The mass storage device 170 may include compact disk (CD) ROM 172, a digital video/versatile disc (DVD) 173, floppy drive 174, and hard drive 176, and any other magnetic or optic storage devices. The mass storage device 170 provides a mechanism to read machine-accessible media. The machine-accessible media may contain computer readable program code to perform tasks as described in the following,

The I/O devices 180_{I} to 180_{K} may include any I/O devices to perform I/O functions. Examples of I/O devices 180_{I} to 180_{K} include controller for input devices (e.g., keyboard, mouse, trackball, pointing device), media card (e.g., audio, video, graphics). The network card 182 provides communication interface to any communication standards such as Institute of Electrical and Electronics Engineers (IEEE) 802.3, IEEE- 1394, IEEE-802.11 x, Bluetooth, and any other network public or proprietary standards

Elements of one embodiment of the invention may be implemented by hardware, firmware, software or any combination thereof. The term hardware generally refers to an element having a physical structure such as electronic, electromagnetic, optical, electro-optical, mechanical, electro-mechanical parts, etc. The term software generally refers to a logical structure, a method, a procedure, a program, a routine, a process, an algorithm, a formula, a function, an expression, etc. The term firmware generally refers to a logical structure, a method, a procedure, a program, a routine, a process, an algorithm, a formula, a function, an expression, etc that is implemented or embodied in a hardware structure (e.g., flash memory, ROM, EROM). Examples of firmware may include microcode, writable control store, micro-programmed structure. When implemented in software or firmware, the elements of an embodiment of the present invention are essentially the code segments to perform the necessary tasks. The software/firmware may include the actual code to carry out the operations described in one embodiment of the invention, or code that emulates or simulates the operations. The program or code segments can be stored in a processor or machine accessible medium or transmitted by a computer data signal embodied in a carrier wave, or a signal modulated by a carrier, over a Transmission medium. The "processor readable or accessible medium" or "machine readable or accessible medium" may include any medium that can store, transmit, or transfer information. Examples of the processor readable or machine accessible medium include an electronic circuit, a semiconductor memory device, a read only memory (ROM), a flash memory, an erasable ROM (EROM), a floppy diskette, a compact disk (CD) ROM, an optical disk, a hard disk, a fiber optic medium, a radio frequency (RF) link, etc. The computer data signal may include any signal that can propagate over a transmission medium such as electronic network channels, optical fibers, air, electromagnetic, RF links, etc. The code segments may be downloaded via computer networks such as the Internet, Intranet, etc. The machine accessible medium may be embodied in an article of manufacture. The machine accessible medium may include data that, when accessed by a machine, cause the machine to perform the operations described in the following. The machine accessible medium may also include program code embedded therein. The program code may include machine readable code to perform the operations described in the hollowing. The term "data" here refers to any type of information that is encoded for machine-readable purposes. Therefore, it may include program, code, data, file, etc.

All or part of an embodiment of the invention may be implemented by hardware, software, or firmware, or any combination thereof. The hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware, and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

One embodiment of the invention may be described as a process which is usually depicted as a flowchart, a flow diagram, a structure diagram, or a block diagram. Although a flowchart may describe the operations as a sequential process, many of the operations can be performed in parallel or concurrently. In addition, the order of the operations may be rearranged. A process is terminated when its operations are completed. A process may correspond to a method, a program, a procedure, a method of manufacturing or fabrication, etc.

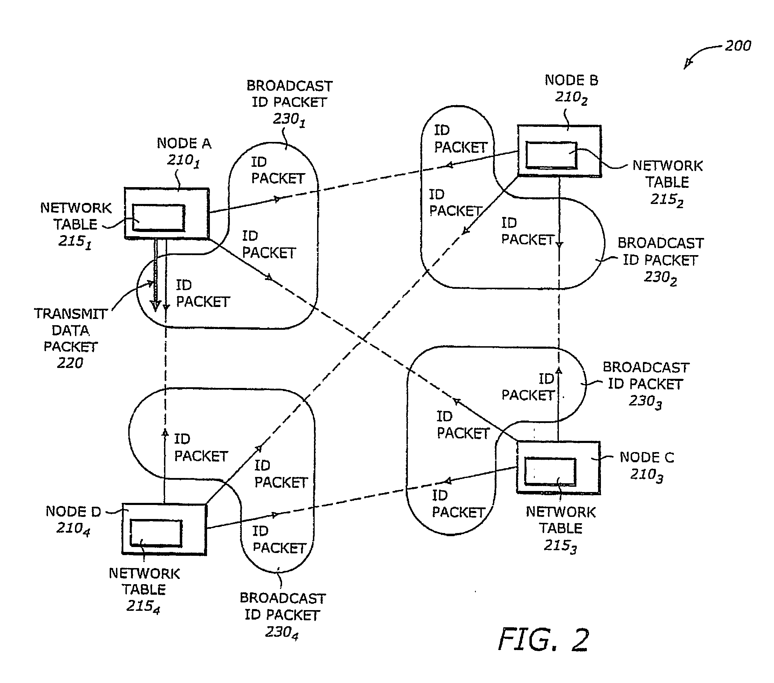

Figure 2 is a diagram illustrating a communication network 200 according to one embodiment of the invention. For illustrative purposes, the network 200 is shown to have four nodes: node A 210₁, node B 210₂, node C 210₃, and node D 210₄. As is known by one skilled in the art, more or less nodes may be used. The nodes may represent a computer (e-g., the computer 20 shown in Figure 1), or an intelligent router with its own processing element. In the following, the index i is used to indicate any one of the above nodes.

Each of the nodes 210ⱼ's communicates with any other nodes using any of the communication technologies as enumerated above. A node may employ more than one type of communication technologies. Each technology may have different data rates, power requirement, and Quality of Service (QoS), etc. The nodes transmit packets or data over the appropriate communication channels (e.g., air, cables, wires). In the example shown in Figure 2, node A 210₁ transmits a data packet 220 to the destination node D 210₄. The data packet 220 may have a transmission requirement such as data rate, power requirement, throughput, latency requirement, or QoS level.

Each of the nodes 210ᵢ's maintains a network table 215ᵢ constructed to facilitate the dynamic routing of packet 220. The network table 215ᵢ is updated constantly or periodically to reflect the current conditions of the network. The current conditions may include any dynamic or variable condition such as data rate, power level, QoS level, noise characteristics, traffic condition (e.g., congestion), node availability, etc.

At node i, the network table 215ᵢ contains transmission paths from node i to other nodes in the network. By maintaining these transmission paths dynamically, node i is able to determine an optimal path to send a packet to a destination node. In particular, when a congestion condition or a bad link (e.g., node unavailability) is detected or determined, node i is able to select an alternate path in the transmission paths that satisfy the transmission requirement for the packet 220.

To build the network tables 215ᵢ's, all the nodes in the network cooperate by sharing information to provide node information. It is not necessary for all the nodes to participate in the sharing of node information, but the more nodes participate in the process, the more complete the network tables 215ⱼ's become, leading to better choices of the optimal or alternate path.

To provide node information, node 210ᵢ broadcasts identification packet 230ᵢ to other nodes in the network. Each identification packet contains information of node 210ᵢ, all identification packets received by node 210_{i,} and data packets received by node 210ᵢ. Since all nodes broadcast their identification packets, they also receive identification packets from other nodes. Each node 210ᵢ builds its network table 215ᵢ by using the ID packets received from other nodes. From the ID packets, node 210ᵢ constructs links from one node to another node together with their link parameters. The link parameters include data rates, signal strength, etc. One way to do this is to exhaustively enumerate all the connections as reported by the ID packets and eliminate redundant links. In a home or small office environment, the number of nodes in the network is typically small. Therefore, managing a network table at each node computationally feasible. The result is a list of all transmission paths connecting node 210ᵢ to all other nodes with which it has communication connections.

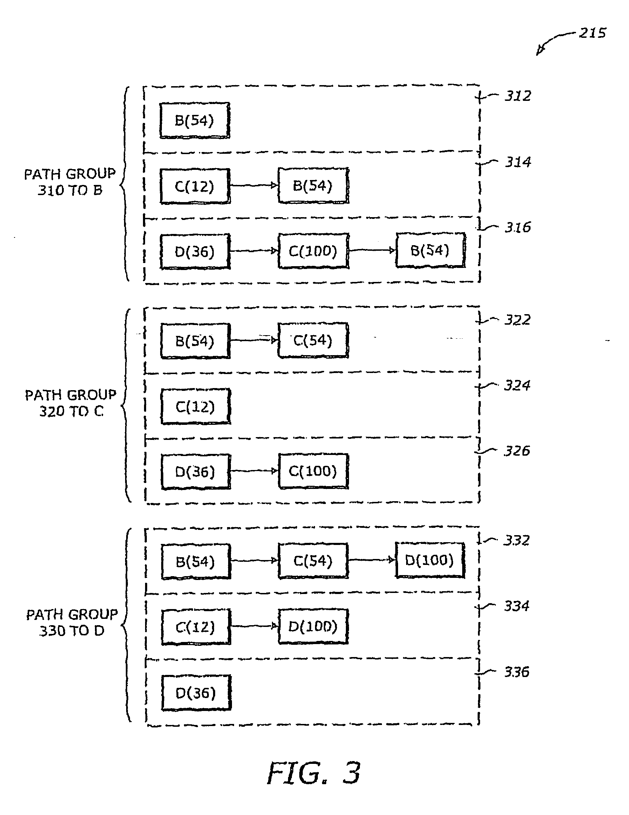

Figure 3 is a diagram illustrating a network table 215 according to one embodiment of the invention. The network table 215 in Figure 3 is an illustrative example for the network shown in Figure 2.

The network table 215 is maintained and updated by node A. It includes a path group 310 to node B, a path group 320 to node C, and a path group 330 to node D. Each path group contains one or more transmission paths that can lead to the same destination node. Each transmission path includes the node identifiers and the associated link parameters (e.g., data rate). From the link parameters, each node can select the optimal path or an alternate path that satisfies the packet requirement. In the illustrative example shown in Figure 3, each transmission path is shown with the node identifier and the data rate in parenthesis. It is contemplated that other link parameters may be included.

The path group 310 includes three transmission paths 312, 314, and 316 connecting node A to node B. Transmission path 312 goes to B directly with a data rate of 54 Mbps. Transmission path 314 goes to C with a data rate of 12 Mbps, then from C to B with a data rate of 54 Mbps. Transmission path 316 goes to D with a data rate of 36 Mbps, then to C with a data rate of 100 Mbps, and then to B with a data rate of 54 Mbps. Similarly, the path group 320 includes three transmission paths 322, 324, and 326 connecting node A to node C. Transmission path 322 goes to B with a data rate of 54 Mbps and then to C with a data rate of 54 Mbps. Transmission path 324 goes to C directly with a data rate of 12 Mbps. Transmission path 326 goes to D with a data rate of 36 Mbps and then to C with a data rate of 100 Mbps. The path group 330 includes transmission paths 332, 334, and 336 connecting node A to node D. Transmission path 332 goes to B with a data rate of 54 Mbps, then to C with a data rate of 54 Mbps, and then to D with a data rate of 100 Mbps. Transmission path 334 goes to C with a data rate of 12 Mbps and then to D with a data rate of 100 Mbps. Transmission path 336 goes to D directly with a data rate of 36 Mbps.

Each node i maintains its network table 215ᵢ similar to the network table 215 maintained by node A as shown in Figure 3. The network table 215; is updated periodically or continuously to reflect the most recent time period. For example, the ID packet transmitted by node i may contain the information on ID packets from other nodes that node i has received in the past T seconds or milliseconds. The ID packet transmitted by node i may be transmitted every K seconds or milliseconds.

Based on the transmission paths listed in the network table 215i, a node i can determine the optimal path to transmit a data packet to a destination node. Each node i may work independently. When there are complete interconnections among the nodes, the network tables maintained by the nodes are consistent because the ID packets are broadcast to all nodes. Therefore, although each node decides how to transmit a packet independently, in normal operation, the overall decision is consistent as if it is given by a single node. For example, suppose node A wants to send a packet to node D. Based on its network table, node A decides that the transmission path A --> C --> B --> D is the optimal path. Then, node A transmits the data packet to node C, When node C received the packet with the instruction to forward it to node D, it will examines its network table to find the optimal path to node D. Since its network table is consistent with the network table maintained by node A, it will also find that the transmission path C--> B --> D is the optimal path. It then sends the packet to node B. When node B receives the packet, it examines its own network table and will find that the transmission B --> D is the optimal path and will send the packet to D. The advantage of having each node to decide how to send a packet is the ability for the nodes to respond to a dynamic condition or an unexpected event. In the above example, there may be a congestion at node B at the time node C receives a packet from node A. This congestion condition is reported to all nodes. Node C then updates its network table and finds that it is more advantageous to send the packet directly to node D instead of through node B as in the previous network table.

When there are partial interconnections among the nodes, for example, not all nodes receive all ID packets, then the network tables among the nodes may not be consistent. In this case, independent decision at each node to route a packet is still valid because each nodes has a better view of what its connections to other nodes than another node. In addition, the dynamic conditions of the network are continuously monitored and updated to allow appropriate responses at each node. A potential problem may arise in the partial interconnections situation in that a packet may be sent back and forth between two nodes. For example, node A may decide that the transmission path A--> C--> B --> D is optimal, and therefore sends the packet to node C. Node C may decide that the path C -> A --> D is the optimal path according to its network table and will send the packet back to A. The packet is therefore sent back and forth between nodes A and C forever until the network table in A or C is changed such that the loop is broken out, There are a number of ways to prevent this situation A simple technique is to transmit the node identifiers of nodes that a packet has traversed on its path and impose a rule that these nodes will not be used as the next node to be sent to. By imposing this rule, a cycle or a loop will never be encountered. Another technique is to not allow independent decision at the intermediate nodes unless there is a change in the dynamic conditions such as a congestion or a bad link. In other words, a node simply forwards a packet according to its original transmission path as seen by the originating node.

Going back to the example shown in Figure 3, suppose that node A needs to transmit a data packet to node C. It will select an optimal path with suitable data rate and number of intermediate nodes depending on its throughput and latency requirements. Suppose that the data throughput requirement is 40 Mbps to node C. Node A examines its network table and finds that the transmission path 322 can satisfy the requirement. Transmission path 326 may also satisfy the requirement because the combined data rates between A to D (36 Mbps) and D to C (100 Mbps) may satisfy the overall 40 Mbps requirement. Additional information or link parameters can be incorporated to refine the search for the optimal path. For example, power requirement, congestion probability, traffic condition, etc. may be used to decide on the optimal path. Suppose path 322 is found to be optimal, node A then sends the packet to node B. When the packet arrives at node B, suppose node B suddenly discovers that there is a bad link between itself and node C, it then examines its own network table and finds an alternative route. It may re-route the packet to node D which will send the packet to node C.

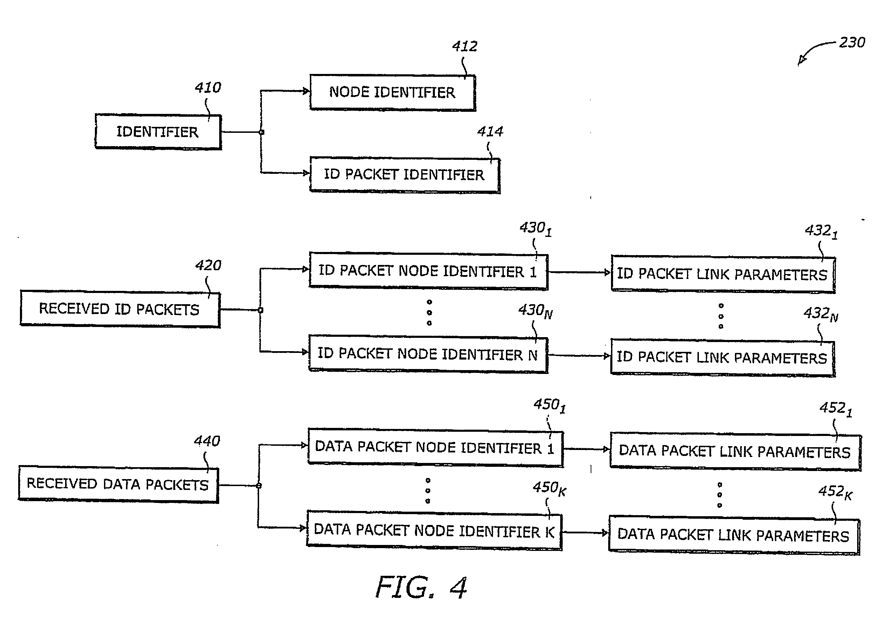

Figure 4 is a diagram illustrating the ID packet 230 according to one embodiment of the invention. The ID packet 230 includes identifier 410, received ID packets 420, and received data packets 440.

The identifier 410 provides identification for tracking purposes. It includes a node identifier 412 and an ID packet identifier 414. The node identifier 412 specifies the name or node designation of the transmit node, i.e., the node that is transmitting the ID packet 230. The ID packet identifier 414 specifies the ID packet such as its number. Usually, the ID packet identifier 414 is unique. The ID packet identifier 414 may also include a time stamp to indicate the time it is transmitted. This information will help the receiving node to build a network table dynamically.

The received ID packets 420 list the ID packets that the transmit node has received in the past T seconds (or some other time unit, e.g., milliseconds). The value of T is typically determined in advance according to the overall network characteristics, or dynamically according to the network dynamic conditions. For example, if there is an indication that the network traffic is getting heavier, the time period T may be decreased to accommodate a fast changing environment, and vice verso. The received ID packets 420 include ID packet node identifiers 430_{I}, to 430_{N} and corresponding ID packet link parameters 432_{I} to 432_{N}, The ID packet node identifiers 430_{I} to 430_{N} are the identifiers of the nodes that transmit the ID packets. The ID packet link parameters 432_{I} to 432_{N} refer to the link parameters that are associated with the transmit nodes. The link parameters include information about the link to or from the corresponding node such as data rate, signal strength, node status (e.g., congested, heavy), etc.

The received data packets 430 list the data packets that the transmit node has received in the past T seconds (or some other time unit, e.g., milliseconds). As above, the value of T is typically determined in advance according to the overall network characteristics, or dynamically according to the network dynamic conditions. The received data packets 430 include data packet node identifiers 450_{I} to 450_{K} and corresponding data packet link parameters 452_{I} to 452_{N}, The data packet node identifiers 450_{I}, to 450_{N} are the identifiers of the nodes that transmit the data packets. The data packet link parameters 452_{I} to 452_{N} refer to the link parameters that are associated with the transmit nodes as in the ID packets.

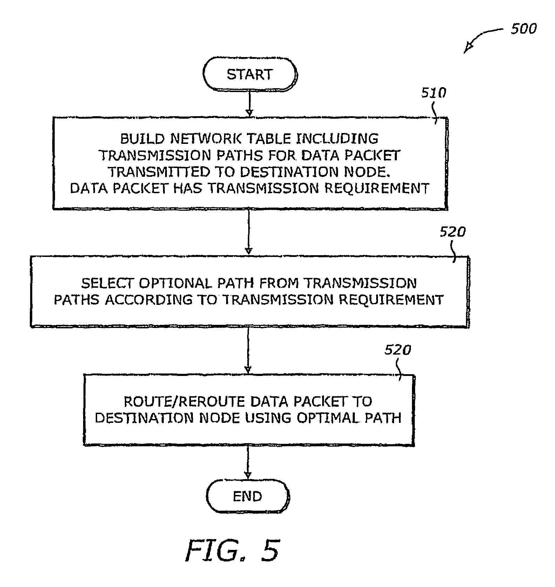

Figure 5 is a flowchart illustrating a process 500 to dynamically route packets according to one embodiment of the invention.

Upon START, the process 500 builds a network table including transmission paths for a data packet transmitted to a destination node (Block 510). The data packet has a transmission requirement such as data rate, throughput or latency requirement, Next, the process 500 selects an optimal path from the transmission paths according to the transmission requirement (Block 520). Then, the process 500 routes or re-routes the data packet to the destination node using the optimal path and is then terminated.

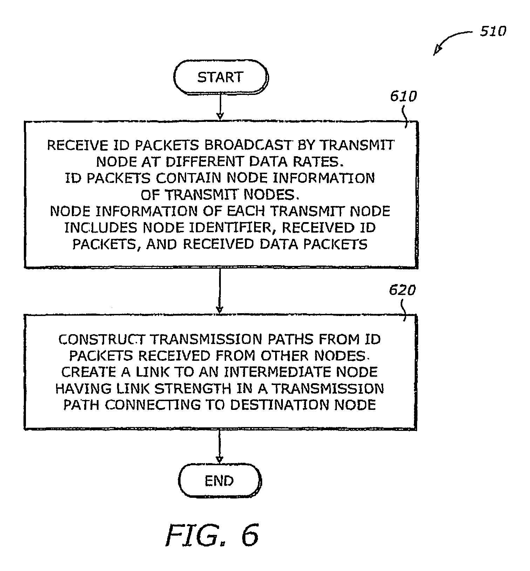

Figure 6 is a flowchart illustrating a process 510 to build a network table according to one embodiment of the invention.

Upon START, the process 510 receives the ID packets broadcast by the transmit nodes at different data rates (Block 610). The ID packets contain the node information of the transmit nodes. The node information of each transmit node includes node identifier, received ID packets, and received data packets. Next, the process 510 constructs the Transmission paths from the received ID packets (Block 620), This may include creating a link to an intermediate node having a link strength in a transmission path connecting to the destination node The process 510 is then terminated.

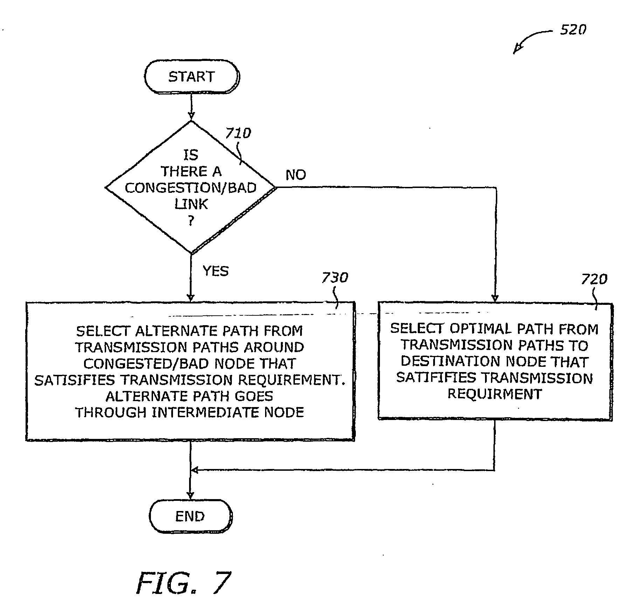

Figure 7 is a flowchart illustrating a process 520 to select the optimal path according to one embodiment of the invention.

Upon START, the process 520 determines if there is a congestion or bad link (Block 710). If no, the process 520 selects the optimal path from the transmission paths in the network table that satisfies the transmission requirement (Block 720) and is then terminated. Otherwise, the process 520 selects an alternate path from the transmission paths around the congested or bad node that satisfies the transmission requirement (Block 730). The alternate path goes through the intermediate node. The process 520 i sthen terminated.

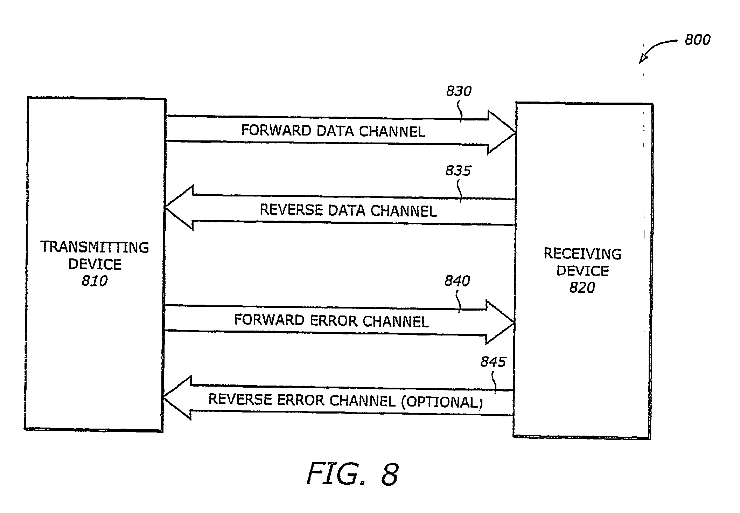

Figure 8 is a diagram illustrating a system 800 with separate error channel according to one embodiment of the invention. The system 800 includes a transmitting device 810, a receiving device 820, a forward data channel 830, a reverse data channel 835, a forward error channel 840, and a reverse error channel 845.

The transmitting device 810 is any node as described above. It may be a computer, a router, a hub, a gateway, or any node in the network. The receiving device 820 is also any node as described above. Both the transmitting device 810 and the receiving device 820 may have communication interfaces compatible to at least one of an Institute of Electrical and Electronics Engineers (IEEE) 802.11 communication, a home phoneline network alliance (HPNA) communication, a ultra wide band (UWB) communication, a multimedia network protocol communication, a wireless communication, a power-line communication, an ethernet communication, a versatile home network (VHN) communication, a Bluetooth communication, a home radio frequency (RF) communication, and an IEEE 1394 communication.

The forward data channel 830 provide a medium to carry the data sent by the transmitting device 810 to the receiving device at a data transmitting rate according to a data transmission protocol. The reverse data channel 835 provides a medium for the receiving device 820 to transmit acknowledgment as an indication of the receipt of the data.

The forward error channel 840 provides a medium to carry an error information sent by the transmitting device 810 to the receiving device 820 at an error transmission rate according to an error transmission protocol. The error channel 840 is separated from the data channel 830. The error transmission rate and the error transmission protocol are independent of the data transmission rate and the error transmission protocol. Typically, the forward error channel has an error transmission power less than the data transmission power. The error information may include an error packet that is tagged to match with a data packet in the data information. The reverse error channel 845 provides an optional acknowledgment of the received error information. The error information may include any error check information such as the forward error control (FEC).

By separating the error information from the data, the error packets in the error channel can be varied rapidly and independently of the data packets in the data channel 830. In addition, the transmission protocol for the error channel may be different than the data channel. For example, for error transmission, the reverse or ackwowledgment maybe optional.

While the invention has been described in terms of several embodiments, those of ordinary skill in the art will recognize that the invention is not limited to the embodiments described, but can be practiced with modification and alteration within the scope of the appended claims. The description is thus to be regarded as illustrative instead of limiting.

## Claims

1. A method comprising:
transmitting data over a data channel (830) having a data transmission power to a receiving device (820) at a data transmission rate according to a data transmission protocol; and
transmitting error information associated with the data over an error channel (840) to the receiving device (820) at an error transmission rate according to an error transmission protocol, the error transmission rate being independent of the data transmission rate, the error transmission protocol being independent of the data transmission protocol, the error channel (840) having an error transmission power less than the data transmission power.

2. The method of claim 1 wherein transmitting the error information comprises:
transmitting an error packet in the error information, the error packet being tagged to match a data packet in the data.

3. The method of claim 1 further comprising:
receiving a data acknowledgment corresponding to the data from the receiving device (820) over a data acknowledgment channel (835).

4. The method of claim 1 further comprising:
receiving an error acknowledgment corresponding to the error information from the receiving device (820) over an error acknowledgment channel (845).

5. The method of claim 1 wherein one of the data and the error channels is configured for communication interface compatible to at least one of an Institute of Electrical and Electronics Engineers, IEEE 802.11 communication, a home phoneline network alliance, HPNA, communication, a ultra wide band, UWB communication, a multimedia network protocol communication, a wireless communication, a power-line communication, an ethernet communication, a versatile home network, VHN, communication, a Bluetooth communication, a home radio frequency, RF communication, and an IEEE 1394 communication.

6. A method comprising:
receiving data over a data channel (830) having a data transmission power from a transmitting device (810) at a data transmission rate according to a data transmission protocol; and
receiving error information associated with the data over an error channel (840) from the transmitting device (810) at an error transmission rate according to an error transmission protocol, the error transmission rate being independent of the data transmission rate, the error transmission protocol being independent of the data transmission protocol, the error channel (840) having an error transmission power less than the data transmission power.

7. The method of claim 6 wherein receiving the error information comprises:
receiving an error packet in the error information, the error packet being tagged to match a data packet in the data.

8. The method of claim 6 further comprising:
transmitting a data acknowledgment corresponding to the data to the transmitting device (810) over a data acknowledgment channel (835).

9. The method of claim 6 further comprising:
transmitting an error acknowledgment corresponding to the error information to the transmitting device (810) over an error acknowledgment channel (845).

10. The method of claim 6 wherein one of the data and the error channels is configured for communication interface compatible to at least one of an Institute of Electrical and Electronics Engineers, IEEE 802.11 communication, a home phoneline network alliance, HPNA communication, a ultra wide band, UWB communication, a multimedia network protocol communication, a wireless communication, a power-line communication, an ethernet communication, a versatile home network, VHN communication, a Bluetooth communication, a home radio frequency, RF communication, and an IEEE 1394 communication.

11. An article of manufacture comprising:
a machine-accessible medium including data that, when accessed by a machine, causes the machine to perform operations comprising:
transmitting data over a data channel (830) having a data transmission power to a receiving device (820) at a data transmission rate according to a data transmission protocol; and
transmitting error information associated with the data over an error channel (840) to the receiving device (820) at an error transmission rate according to an error transmission protocol, the error transmission rate being independent of the data transmission rate, the error transmission protocol being independent of the data transmission protocol, the error channel (840) having an error transmission power less than the data transmission power.

12. An article of manufacture comprising:
a machine-accessible medium including data that, when accessed by a machine, causes the machine to perform operations comprising:
receiving data over a data channel (830) having a data transmission power from a transmitting device (810) at a data transmission rate according to a data transmission protocol; and
receiving error information associated with the data over an error channel (840) from the transmitting device (810) at an error transmission rate according to an error transmission protocol, the error transmission rate being independent of the data transmission rate, the error transmission protocol being independent of the data transmission protocol, the error channel (840) having an error transmission power less than the data transmission power.

13. A system (800) comprising:
a data channel (830) having a data transmission power to carry data transmitted from a transmitting device (810) to a receiving device (820) at a data transmission rate according to a data transmission protocol; and
an error channel (840) separated from the data channel (830) to carry error information associated with the data at an error transmission rate according to an error transmission protocol, the error transmission rate being independent of the data transmission rate, the error transmission protocol being independent of the data transmission protocol, the error channel (840) having an error transmission power less than the data transmission power.

## Patentansprüche

1. Verfahren, das aufweist:
Übertragen von Daten über einen Datenkanal (830) mit einer Datenübertragungsleistung an eine Empfangsvorrichtung (820) mit einer Datenübertragungsrate gemäß einem Datenübertragungsprotokoll, und
Übertragen von mit den Daten verknüpften Fehlerinformationen über einen Fehlerkanal (840) an die Empfangsvorrichtung (820) mit einer Fehlerübertragungsrate gemäß einem Fehlerübertragungsprotokoll, wobei die Fehlerübertragungsrate von der Datenübertragungsrate unabhängig ist, das Fehlerübertragungsprotokoll vom Datenübertragungsprotokoll unabhängig ist und der Fehlerkanal (840) eine Fehlerübertragungsleistung aufweist, die geringer ist als die Datenübertragungsleistung.

2. Verfahren nach Anspruch 1, wobei das Übertragen der Fehlerinformationen umfasst:
Übertragen eines in den Fehlerinformationen enthaltenen Fehlerpakets, wobei das Fehlerpaket als übereinstimmend mit einem in den Daten enthaltenen Datenpaket gekennzeichnet ist.

3. Verfahren nach Anspruch 1, das weiterhin aufweist:
Empfangen einer den Daten entsprechenden Datenbestätigung von der Empfangsvorrichtung (820) über einen Datenbestätigungskanal (835).

4. Verfahren nach Anspruch 1, das weiterhin aufweist:
Empfangen einer den Fehlerinformationen entsprechenden Fehlerbestätigung von der Empfangsvorrichtung (820) über einen Fehlerbestätigungskanal (845).

5. Verfahren nach Anspruch 1, wobei einer der Daten- und der Fehlerkanäle als Kommunikationsschnittstelle konfiguriert ist, die mit mindestens einer der Institute of Electrical and Electronics Engineers, IEEE 802.11, Kommunikation, einer Home Phoneline Network Alliance, HPNA, Kommunikation, einer Ultrabreitband, UWB, Kommunikation, einer Multimedia Netzwerk Protokoll Kommunikation, einer Funkkommunikation, einer Stromleitungskommunikation, einer Ethernet Kommunikation, einer vielseitigen Heim-Netzwerk (Versatile Home Network), VHN, Kommunikation, einer Bluetooth Kommunikation, einer Heim-Funkfrequenz (Home Radio Frequency), RF, Kommunikation und einer IEEE 1394 Kommunikation kompatibel ist.

6. Verfahren, das aufweist:
Empfangen von Daten über einen Datenkanal (830) mit einer Datenübertragungsleistung von einer Übertragungsvorrichtung (810) mit einer Datenübertragungsrate gemäß einem Datenübertragungsprotokoll, und
Empfangen von mit den Daten verknüpften Fehlerinformationen über einen Fehlerkanal (840) von der Übertragungsvorrichtung (810) mit einer Fehlerübertragungsrate gemäß einem Fehlerübertragungsprotokoll, wobei die Fehlerübertragungsrate von der Datenübertragungsrate unabhängig ist, das Fehlerübertragungsprotokoll vom Datenübertragungsprotokoll unabhängig ist und der Fehlerkanal (840) eine Fehlerübertragungsleistung aufweist, die geringer ist als die Datenübertragungsleistung.

7. Verfahren nach Anspruch 6, wobei das Empfangen der Fehlerinformationen umfasst:
Empfangen eines in den Fehlerinformationen enthaltenen Fehlerpakets, wobei das Fehlerpaket als übereinstimmend mit einem in den Daten enthaltenen Datenpaket gekennzeichet ist.

8. Verfahren nach Anspruch 6, das weiterhin aufweist:
Übertragen einer den Daten entsprechenden Datenbestätigung an die Übertragungsvorrichtung (820) über einen Datenbestätigungskanal (835).

9. Verfahren nach Anspruch 6, das weiterhin aufweist:
Übertragen einer den Fehlerinformationen entsprechenden Fehlerbestätigung an die Übertragungsvorrichtung (820) über einen Fehlerbestätigungskanal (845).

10. Verfahren nach Anspruch 6, wobei einer der Daten- und der Fehlerkanäle als Kommunikationsschnittstelle konfiguriert ist, die mit mindestens einer der Institute of Electrical and Electronics Engineers, IEEE 802.11, Kommunikation, einer Home Phoneline Network Alliance, HPNA, Kommunikation, einer Ultrabreitband, UWB, Kommunikation, einer Multimedia Netzwerk Protokoll Kommunikation, einer Funkkommunikation, einer Stromleitungskommunikation, einer Ethernet Kommunikation, einer vielseitigen Heim-Netzwerk (Versatile Home Network), VHN, Kommunikation, einer Bluetooth Kommunikation, einer Heim-Funkfrequenz (Home Radio Frequency), RF, Kommunikation und einer IEEE 1394 Kommunikation kompatibel ist.

11. Herstellungsanikel, der aufweist:
ein Medium einschließlich Daten, auf das eine Maschine zugreifen kann und das, wenn eine Maschine auf es zugreift, die Maschine zur Ausführung von Operationen veranlasst, die umfassen:
Übertragen von Daten über einen Datenkanal (830) mit einer Datenübertragungsleistung an eine Empfangsvorrichtung (820) mit einer Datenübertragungsrate gemäß einem Datenübertragungsprotokoll, und
Übertragen von mit den Daten verknüpften Fehlerinformationen an die Empfangsvorrichtung (820) über einen Fehlerkanal (840) mit einer Fehlerübertragungsrate gemäß einem Fehlerübertragungsprotokoll, wobei die Fehlerübertragungsrate von der Datenübertragungsrate unabhängig ist, das Fehlerübertragungsprotokoll vom Datenübertragungsprotokoll unabhängig ist und der Fehlerkanal (840) eine Fehlerübertragungsleistung aufweist, die geringer ist als die Datenübertragungsleistung.

12. Herstellungsartikel, der aufweist:
ein Medium einschließlich Daten, auf das eine Maschine zugreifen kann und das, wenn eine Maschine auf es zugreift, die Maschine zur Ausführung von Operationen veranlasst, die umfassen:
Empfangen von Daten über einen Datenkanal (830) mit einer Datenübertragungsleistung von einer Übertragungsvorrichtung (810) mit einer Datenübertragungsrate gemäß einem Datenübertragungsprotokoll, und
Empfangen von mit den Daten verknüpften Fehlerinformationen über einen Fehlerkanal (840) von der Übertragungsvorrichtung (810) mit einer Fehlerübertragungsrate gemäß einem Fehlerübertragungsprotokoll, wobei die Fehlerübertragungsrate von der Datenübertragungsrate unabhängig ist, das Fehlerübertragungsprotokoll vom Datenübertragungsprotokoll unabhängig ist und der Fehlerkanal (840) eine Fehlerübertragungsleistung aufweist, die geringer ist als die Datenübertragungsleistung.

13. System (800), das aufweist:
einen Datenkanal (830) mit einer Datenübertragungsleistung, um Daten zu transportieren, die von einer Übertragungsvorrichtung (810) an eine Empfangsvorrichtung (820) mit einer Datenübertragungsrate gemäß einem Datenübertragungsprotokoll übertragen werden; und
einen vom Datenkanal (830) getrennten Fehlerkanal (840), um mit den Daten verknüpfte Fehlerinformationen mit einer Fehlerübertragungsrate gemäß einem Fehlerübertragungsprotokoll zu transportieren, wobei die Fehlerübertragungsrate von der Datenübertragungsrate unabhängig ist, das Fehlerübertragungsprotokoll vom Datenübertragungsprotokoll unabhängig ist und der Fehlerkanal (840) eine Fehlerübertragungsleistung aufweist, die geringer ist als die Datenübertragungsleistung.

## Revendications

1. Procédé comprenant :
la transmission de données sur un canal de données (830) ayant une puissance de transmission de données à un dispositif de réception (820) à un taux de transmission de données selon un protocole de transmission de données ; et
la transmission d'informations d'erreur associées aux données sur un canal d'erreur (840) au dispositif de réception (820) à un taux de transmission d'erreur selon un protocole de transmission d'erreur, le taux de transmission d'erreur étant indépendant du taux de transmission de données, le protocole de transmission d'erreur étant indépendant du protocole de transmission de données, le canal d'erreur (840) ayant une puissance de transmission d'erreur inférieure à la puissance de transmission de données.

2. Procédé selon la revendication 1, dans lequel la transmission des informations d'erreur comprend :
la transmission d'un paquet d'erreur dans les informations d'erreur, le paquet d'erreur étant étiqueté pour correspondre à un paquet de données dans les données.

3. Procédé selon la revendication 1, comprenant en outre :
la réception d'un accusé de réception de données correspondant aux données en provenance du dispositif de réception (820) sur un canal d'accusé de réception de données (835).

4. Procédé selon la revendication 1, comprenant en outre :
la réception d'un accusé de réception d'erreur correspondant aux informations d'erreur en provenance du dispositif de réception (820) sur un canal d'accusé de réception d'erreur (845).

5. Procédé selon la revendication 1, dans lequel un des canaux de données et d'erreur est configuré pour une interface de communication compatible avec au moins une parmi une communication de l'Institut des ingénieurs électriciens et électroniciens (Institute of Electrical and Electronics Engineers, IEEE) 802.11, une communication de l'association HomePNA (home phoneline network alliance, HPNA), une communication ultralarge bande (ultra wide band, UWB), une communication de protocole de réseau multimédia, une communication sans fil, une communication par courants porteurs en ligne, une communication Ethernet, une communication de réseau domestique polyvalent (versatile home network, VHN), une communication Bluetooth, une communication radiofréquence, RF, domestique, et une communication IEEE 1394.

6. Procédé comprenant :
la réception de données sur un canal de données (830) ayant une puissance de transmission de données en provenance d'un dispositif de transmission (810) à un taux de transmission de données selon un protocole de transmission de données ; et
la réception d'informations d'erreur associées aux données sur un canal d'erreur (840) en provenance du dispositif de transmission (810) à un taux de transmission d'erreur selon un protocole de transmission d'erreur, le taux de transmission d'erreur étant indépendant du taux de transmission de données, le protocole de transmission d'erreur étant indépendant du protocole de transmission de données, le canal d'erreur (840) ayant une puissance de transmission d'erreur inférieure à la puissance de transmission de données.

7. Procédé selon la revendication 6, dans lequel la réception des informations d'erreur comprend :
la réception d'un paquet d'erreur dans les informations d'erreur, le paquet d'erreur étant étiqueté pour correspondre à un paquet de données dans les données.

8. Procédé selon la revendication 6, comprenant en outre :
la transmission d'un accusé de réception de données correspondant aux données au dispositif de transmission (810) sur un canal d'accusé de réception de données (835).

9. Procédé selon la revendication 6, comprenant en outre :
la transmission d'un accusé de réception d'erreur correspondant aux informations d'erreur au dispositif de transmission (810) sur un canal d'accusé de réception d'erreur (845).

10. Procédé selon la revendication 6, dans lequel un des canaux de données et d'erreur est configuré pour une interface de communication compatible avec au moins une parmi une communication de l'Institut des ingénieurs électriciens et électroniciens (Institute of Electrical and Electronics Engineers, IEEE) 802.11, une communication de l'association HomePNA (home phoneline network alliance, HPNA), une communication ultralarge bande (ultra wide band, UWB), une communication de protocole de réseau multimédia, une communication sans fil, une communication par courants porteurs en ligne, une communication Ethernet, une communication de réseau domestique polyvalent (versatile home network, VHN), une communication Bluetooth, une communication radiofréquence, RF, domestique, et une communication IEEE 1394.

11. Article de fabrication comprenant :
un support accessible par machine comprenant des données qui, lorsqu'elles font l'objet d'un accès par une machine, amènent la machine à effectuer des opérations comprenant :
la transmission de données sur un canal de données (830) ayant une puissance de transmission de données à un dispositif de réception (820) à un taux de transmission de données selon un protocole de transmission de données ; et
la transmission d'informations d'erreur associées aux données sur un canal d'erreur (840) au dispositif de réception (820) à un taux de transmission d'erreur selon un protocole de transmission d'erreur, le taux de transmission d'erreur étant indépendant du taux de transmission de données, le protocole de transmission d'erreur étant indépendant du protocole de transmission de données, le canal d'erreur (840) ayant une puissance de transmission d'erreur inférieure à la puissance de transmission de données.

12. Article de fabrication comprenant :
un support accessible par machine comprenant des données qui, lorsqu'elles font l'objet d'un accès par une machine, amènent la machine à effectuer des opérations comprenant :
la réception de données sur un canal de données (830) ayant une puissance de transmission de données en provenance d'un dispositif de transmission (810) à un taux de transmission de données selon un protocole de transmission de données ; et
la réception d'informations d'erreur associées aux données sur un canal d'erreur (840) en provenance du dispositif de transmission (810) à un taux de transmission d'erreur selon un protocole de transmission d'erreur, le taux de transmission d'erreur étant indépendant du taux de transmission de données, le protocole de transmission d'erreur étant indépendant du protocole de transmission de données, le canal d'erreur (840) ayant une puissance de transmission d'erreur inférieure à la puissance de transmission de données.

13. Système (800) comprenant :
un canal de données (830) ayant une puissance de transmission de données pour acheminer des données transmises d'un dispositif de transmission (810) à un dispositif de réception (820) à un taux de transmission de données selon un protocole de transmission de données ; et
un canal d'erreur (840) séparé du canal de données (830) pour acheminer des informations d'erreur associées aux données à un taux de transmission d'erreur selon un protocole de transmission d'erreur, le taux de transmission d'erreur étant indépendant du taux de transmission de données, le protocole de transmission d'erreur étant indépendant du protocole de transmission de données, le canal d'erreur (840) ayant une puissance de transmission d'erreur inférieure à la puissance de transmission de données.
